(19) Europäisches Patentamt / European Patent Office / Office européen des brevets

(11) **EP 3 760 845 B1**

(12) **FASCICULE DE BREVET EUROPEEN**

(45) Date de publication et mention
de la délivrance du brevet:
**24.05.2023 Bulletin 2023/21**

(21) Numéro de dépôt: **20180437.4**

(22) Date de dépôt: **17.06.2020**

(51) Classification Internationale des Brevets (IPC):
**F01N 3/08** $^{(2006.01)}$ **F01N 9/00** $^{(2006.01)}$
**F02D 41/00** $^{(2006.01)}$ **F02D 41/02** $^{(2006.01)}$

(52) Classification Coopérative des Brevets (CPC):
**F01N 3/0842; F01N 3/0814; F01N 3/0871;**
**F01N 3/0885; F01N 9/00; F02D 41/0275;**
F01N 2430/06; F01N 2560/025; F01N 2560/06;
F01N 2570/14; F01N 2900/0422; F01N 2900/08;
F01N 2900/1402; F01N 2900/1602; Y02A 50/20;

(Cont.)

(54) **PROCÉDÉ DE COMMANDE D'UN VÉHICULE AUTOMOBILE MUNI D'UN PIÈGE À OXYDES D'AZOTE POUR LA DÉSOXYDATION DUDIT PIÈGE**

STEUERVERFAHREN EINES KRAFTFAHRZEUGS, DAS MIT EINER STICKOXIDFALLE ZUR DESOXYDIERUNG DIESER FALLE AUSGESTATTET IST

METHOD FOR CONTROLLING A MOTOR VEHICLE PROVIDED WITH A NITROGEN OXIDE TRAP FOR DEOXIDATION OF SAID TRAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2019 FR 1907461**

(43) Date de publication de la demande:
**06.01.2021 Bulletin 2021/01**

(73) Titulaire: **Renault s.a.s**
**92100 Boulogne Billancourt (FR)**

(72) Inventeurs:
• **BERARD, SANDRINE**
**91760 ITTEVILLE (FR)**
• **DASSE, BENJAMIN**
**91600 SAVIGNY SUR ORGE (FR)**
• **GUILIE, IVAN**
**77170 BRIE COMTE ROBERT (FR)**
• **SAVY, SYLVAIN**
**45170 TIVERNON (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 1 939 420    DE-A1-102018 133 184**
**GB-A- 2 484 746**

(52) Classification Coopérative des Brevets (CPC):
(Cont.)
Y02T 10/40

**Description**

*Domaine technique*

L'invention a pour domaine technique la commande des moteurs à combustion interne pour véhicules automobiles, et plus particulièrement la commande de tels moteurs munis d'un piège à oxydes d'azote.

*Etat de la technique antérieure*

Le durcissement des normes de dépollution nécessite de travailler soit sur la réduction des polluants à leur origine en optimisant la combustion, soit par la mise en place de systèmes de post traitement.

Parmi les systèmes de post-traitement, on peut citer les pièges à oxydes d'azote LNT (acronyme anglophone pour « Lean Nox Trap »), équipant les véhicules automobiles munis de moteur à combustion interne de type diesel. Ce système de post-traitement chimique piège les oxydes d'azote, nocifs pour la santé, et les transforme en gaz neutres. Le système de post-traitement LNT assure une fonction d'oxydation des hydrocarbures imbrûlés HC (hydrocarbures qui sont issus d'une combustion incomplète) et du monoxyde de carbone (monoxyde de carbone qui est dû à une combustion incomplète par manque d'oxygène), et un traitement des oxydes d'azote (oxydes d'azote provenant de la combustion du gazole à des températures élevées).

Un piège à oxydes d'azote fonctionne en alternant les phases de chargement du piège et les phases de purge du piège, de façon totalement transparente pour l'utilisateur. Lors des phases de chargement, le piège à oxydes d'azote stocke les oxydes d'azote contenus dans les gaz d'échappement en les piégeant chimiquement, grâce à une imprégnation spécifique dans le pot catalytique (platine, baryum, rhodium). Le platine sur le catalyseur transforme le monoxyde d'azote en dioxyde d'azote ($NO_2$). L'oxyde de baryum fixe les molécules de $NO_2$ pour en faire une chaîne $Ba(NO_3)_2$ qui se fixe dans le piège.

Lors des phases de purge, les éléments stockés dans le piège à oxydes d'azote sont éliminés par une réaction chimique en milieu réducteur. Pour cela, le moteur fonctionne en richesse supérieure à 1, c'est-à-dire avec un mélange où la quantité d'air est juste nécessaire pour la combustion complète du gazole. Les oxydes d'azote sont ainsi transformés en gaz neutres (principalement de l'azote). Le piège à oxydes d'azote est alors nettoyé et prêt à poursuivre son rôle de piège à oxyde d'azote. Pour maîtriser ce fonctionnement, il est nécessaire de contrôler l'efficacité de traitement des HC/CO et les efficacités de stockage des oxydes d'azote $NO_x$.

Concernant les hydrocarbures et le monoxyde de carbone, la durée nécessaire pour atteindre la température d'amorçage du catalyseur est augmentée, si le piège à oxydes d'azote est oxydé. Cela a une incidence forte sur le traitement des émissions de HC/CO lors des phases froides de roulage.

Concernant les oxydes d'azote $NO_x$, l'efficacité de stockage des oxydes d'azote $NO_x$ est réduite lors d'une oxydation des composants du piège. Cela arrive après un apport d'oxygène très important à des températures à l'échappement supérieures à 500°C. L'oxydation peut intervenir lors de certaines phases de roulage ou lors de la régénération d'un filtre à particules.

La réduction de la capacité de stockage augmente les émissions de $NO_x$ en sortie du circuit d'échappement du moteur en réduisant la fraction stockée de ces gaz. Le risque majeur de fonctionner avec un piège à oxydes d'azote oxydé est d'avoir une perte d'efficacité de traitement des émissions polluantes HC/CO et NOx.

Il existe donc un problème technique relatif à l'oxydation du piège à oxydes d'azote et à la diminution de la qualité et de la robustesse des émissions polluantes.

De l'état de la technique antérieure, on connaît le document US20080276602A1 qui divulgue un procédé de contrôle d'un moteur à combustion interne équipé d'un filtre à particules diesel DPF (acronyme pour « diesel particulate filter ») et d'un piège à oxydes d'azote LNT. Le problème à résoudre est un risque de désactivation du piège à oxydes d'azote LNT lors des régénérations (ou purges) du piège, lesquelles se font en augmentant la température du piège jusqu'à un seuil de combustion des suies, et un basculement du fonctionnement du moteur en mélange pauvre. En d'autres termes il y a un apport de débit d'oxygène et de température élevée.

Selon ce document, il est prévu, lors d'une régénération, de vérifier si une réactivation du piège à oxydes d'azote LNT est nécessaire, ce qui peut dépendre par exemple de la durée de la régénération, de la température de la régénération ou de conditions de fonctionnement du moteur. Il est aussi indiqué que dans un mode de réalisation, on peut estimer le degré d'oxydation du piège à oxydes d'azote LNT, par un modèle cinétique par exemple, mais sans donner de détails.

Selon ce document, il est également prévu qu'en cas de besoin de réactivation, il y ait un basculement du réglage du moteur en mode riche accompagné d'un arrêt de la régénération. Il est aussi précisé que dans un cas, le mode peut être continuellement riche, ou bien qu'il puisse consister en une alternance de cycles riches et pauvres de façon à diminuer les émissions de HC et CO pendant la réactivation du piège à oxydes d'azote LNT.

Ce document ne traite que le cas d'une oxydation qui fait suite à une régénération d'un piège à oxydes d'azote.

Il ne règle pas le problème de l'oxydation en général, qui peut dépendre de l'utilisation du véhicule.

Le problème technique à résoudre demeure.

On connaît également le document DE 10 2018 133184, le document EP1 939 420 et le document GB 2 484 746.

Le document DE 10 2018 133184 divulgue un dispositif de purification des gaz d'échappement pour un moteur à combustion interne, notamment pour un moteur à combustion interne muni d'un piège catalytique à oxydes d'azote.

Le document EP1 939 420 divulgue une méthode de désulfurisation d'un piège catalytique à oxydes d'azote d'un moteur à combustion interne fonctionnant en mélange pauvre.

Le document GB 2 484 746 divulgue une méthode d'arrêt d'une régénération d'un piège catalytique à oxydes d'azote.

Ces documents ne résolvent pas non plus le problème technique à résoudre.

## *Exposé de l'invention*

L'invention a pour objet un procédé de commande d'un véhicule automobile muni d'un moteur à combustion interne et d'un piège à oxydes d'azote dans la ligne d'échappement dudit moteur à combustion interne, comprenant les étapes suivantes :

- on détermine la température du piège à oxydes d'azote et on mesure le débit d'oxygène en amont du piège à oxydes d'azote,
- on détermine une valeur d'un critère d'oxydation du piège à oxydes d'azote en fonction de la température du piège à oxydes d'azote et du débit d'oxygène en amont du piège à oxydes d'azote depuis le dernier traitement de désoxydation du piège à oxydes d'azote,
- on détermine si la valeur du critère d'oxydation est supérieure à au moins un seuil de critère d'oxydation, et, lorsque tel est le cas, on détermine que le au moins un niveau d'alerte, correspondant à au moins un seuil de critère d'oxydation franchi, est activé,
- on réalise un traitement de désoxydation du piège à oxydes d'azote en commandant le moteur à combustion interne de sorte à alterner des phases de fonctionnement à richesse supérieure à 1 et des phases de fonctionnement à richesse inférieure à 1, et
- on interrompt le traitement de désoxydation lorsque la durée cumulée des phases de fonctionnement à richesse supérieure à 1 est égale à une durée prédéterminée fonction du au moins un niveau d'alerte activé.

On peut déterminer le critère d'oxydation du piège à oxydes d'azote par l'intermédiaire d'une cartographie d'iso-oxydation à trois dimensions liant la température du piège à oxydes d'azote, c'est-à-dire la température interne régnant dans le piège à oxydes d'azote, le débit d'oxygène en amont du piège à oxydes d'azote et le critère d'oxydation fonction du temps écoulé depuis le dernier traitement de désoxydation du piège à oxydes d'azote.

On peut continuer à déterminer le critère d'oxydation après l'activation d'au moins une alerte et on interrompt la détermination du critère d'oxydation dès que le traitement de désoxydation débute.

Si au moins un niveau d'alerte est activé pendant la régénération d'un filtre à particules disposé dans la ligne d'échappement du moteur à combustion interne, on peut retarder le traitement de désoxydation du piège à oxydes d'azote jusqu'à ce que la régénération du filtre à particules soit achevée, puis, on déclenche le traitement de désoxydation du piège à oxydes d'azote.

Lors du traitement de désoxydation du piège à oxydes d'azote, on peut commander le moteur à combustion interne de sorte que la température du piège à oxydes d'azote demeure comprise entre un seuil minimum de température de désoxydation et un seuil maximum de température de désoxydation.

Pour la détermination de la durée cumulée, on peut pondérer la durée passée dans au moins une sous-gamme de températures comprise entre le seuil minimum de température de désoxydation et le seuil maximum de température de désoxydation.

Chaque niveau d'alerte peut être associé à une durée prédéterminée de désoxydation différente, et lors du traitement de désoxydation, on peut considérer la durée prédéterminée la plus importante associée à un niveau d'alerte activé pour l'interruption du traitement de désoxydation.

On peut mesurer la température des gaz circulant dans le piège à oxydes d'azote en amont et en aval du piège à oxydes d'azote, puis on peut déterminer par modélisation la température du piège à oxydes d'azote en fonction de la température des gaz circulant dans le piège à oxydes d'azote en amont et en aval du piège à oxydes d'azote.

On peut déterminer la température du piège à oxydes d'azote en mesurant la température interne du piège à oxydes d'azote avec un capteur de température

Le procédé de commande présente l'avantage de ne pas nécessiter de composant matériels supplémentaires, ce qui en réduit le coût et l'impact sur la masse du véhicule.

*Brève description des dessins*

D'autres buts, caractéristiques et avantages de l'invention apparaîtront à la lecture de la description suivante, donnée uniquement à titre d'exemple non limitatif et faite en référence aux dessins annexés sur lesquels :

[Fig 1] illustre les principales étapes d'un procédé de commande selon l'invention, et
[Fig 2] illustre les valeurs prises par les différentes valeurs de fonctionnement et de commande du procédé.

*Description détaillée*

La solution proposée consiste à détecter l'oxydation d'un piège à oxydes d'azote LNT et à traiter cette oxydation.

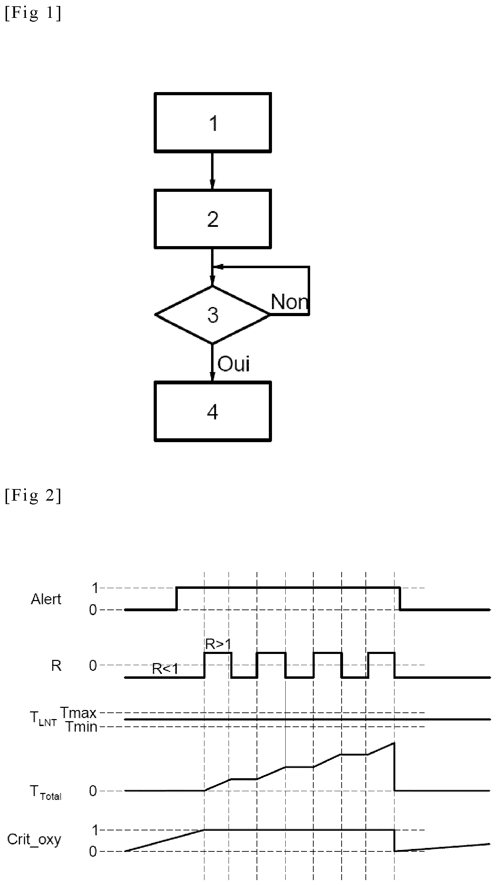

Le procédé de commande d'un moteur à combustion interne selon l'invention est illustré par la Figure 1 et comprend une première étape 1 au cours de laquelle on détermine la température du piège à oxydes d'azote. Pour réaliser cela, on détermine la température des gaz circulant dans le piège à oxydes d'azote en amont et en aval du piège à oxydes d'azote et on en déduit la température du piège à oxydes d'azote (température interne, régnant dans le piège). Alternativement, on mesure la température interne du piège à oxydes d'azote avec un capteur de température.

Toujours au sein de la première étape 1, on mesure le débit d'oxygène en amont du piège à oxydes d'azote par l'intermédiaire d'une sonde de richesse.

Au cours d'une deuxième étape 2, on détermine un critère d'oxydation du piège à oxydes d'azote en fonction de la température dans le piège à oxydes d'azote et du débit d'oxygène en amont du piège à oxydes d'azote depuis le dernier traitement de l'oxydation du piège à oxydes d'azote LNT.

Le critère d'oxydation est déterminé par l'écart des émissions de monoxyde de carbone CO entre un piège à oxydes d'azote LNT non oxydé et un piège à oxydes d'azote LNT oxydé.

Plus précisément, on détermine le critère d'oxydation en fonction d'une cartographie d'iso-oxydation à trois dimensions liant la température dans le piège à oxydes d'azote, le débit d'oxygène en amont du piège à oxydes d'azote et le critère d'oxydation Crit_oxy fonction du temps $t_{total\_oxy}$ écoulé depuis le dernier traitement de l'oxydation du piège à oxydes d'azote LNT.

Le critère d'oxydation Crit_oxy est alors défini par l'équation suivante à température et débit d'oxygène donnés :

[Math 1]

$$Crit\_oxy = \int (100/t_{total\_oxy})dt$$

Il est à noter que chaque iso oxydation de la cartographie est construite à partir de plusieurs points de fonctionnement amenant à la même dégradation de la pièce, c'est-à-dire à la même efficacité de traitement des émissions de CO.

Par hypothèse, on définit que le critère d'oxydation est égal à 100% sur une iso oxydation donnée lorsque l'on atteint une durée prédéterminée au débit d'oxygène en amont du piège à oxydes d'azote et à la température du piège à oxydes d'azote donnés. On en déduit un pourcentage d'oxydation par seconde pour chaque point de la cartographie.

Le critère d'oxydation varie ainsi entre 0% et 100% et dépend de la durée pendant laquelle le piège à oxydes d'azote est soumis à des conditions oxydantes par rapport à une durée prédéterminée menant à une oxydation totale (100% d'oxydation).

La cartographie définit également plusieurs courbes d'iso-oxydation présentant chacune un taux différent d'oxydation par seconde. Lors du fonctionnement du véhicule, le point de fonctionnement (débit $O_2$ en amont du piège et température du piège à oxydes d'azote) se déplace sur et entre les courbes d'iso-oxydation. On obtient ainsi à tout moment un taux d'oxydation par seconde qui est sommé sur le temps passé au point de fonctionnement pour obtenir le critère d'oxydation.

La cartographie à trois dimensions d'iso-oxydation comprend par ailleurs des températures du piège à oxydes d'azote comprises entre une température minimale et une température maximale. La température minimale est la température en dessous de laquelle le phénomène physique d'oxydation n'est pas mesurable. La température maximale est la température au-dessus de laquelle le matériau du piège à oxydes d'azote piège à oxydes d'azote serait dégradé.

Au cours d'une troisième étape 3, on détermine au moins un niveau d'alerte en fonction de la comparaison de la valeur du critère d'oxydation du piège à oxydes d'azote à au moins un seuil de critère d'oxydation. Dès qu'au moins un niveau d'alerte est atteint, le procédé se poursuit par une quatrième étape 4 de traitement de l'oxydation.

Comme les conditions de déclenchement du traitement de l'oxydation peuvent ne pas être réalisées immédiatement après la réception de la requête, le calcul du critère d'oxydation continue à s'incrémenter. Toutefois, la valeur du critère d'oxydation est figée dès que le traitement de l'oxydation aura débuté. De même, si un niveau d'alerte est atteint pendant la régénération d'un filtre à particules, le traitement de l'oxydation du piège à oxydes d'azote est retardé jusqu'à ce que la régénération du filtre à particules soit achevée. A ce moment, et dès que les conditions de déclenchement du traitement de l'oxydation peuvent être réalisées, on déclenche le traitement de l'oxydation du piège à oxydes d'azote.

On va maintenant décrire la quatrième étape 4 de traitement de l'oxydation d'un piège à oxydes d'azote. Le traitement de l'oxydation est effectué par un mode de combustion alternant des phases de richesse supérieure à 1 et des phases de richesse inférieure à 1. On rappelle que la richesse est fonction du rapport de la quantité de carburant par la quantité d'oxygène dans un mélange gaz-carburant.

L'efficacité du traitement de l'oxydation dépend de la température du piège à oxydes d'azote LNT au moment de l'alternance des phases de richesse supérieure à 1 et des phases de richesse inférieure à 1. On définit un seuil minimum de température de désoxydation et un seuil maximum de température de désoxydation entre lesquels la température du piège à oxydes d'azote doit se situer lors du traitement de l'oxydation afin d'avoir une efficacité de désoxydation optimale. La durée du traitement de l'oxydation dépend de la durée cumulée passée à richesse supérieure à 1 et à une température du piège à oxydes d'azote comprise entre les seuils minimum et maximum. Lorsque la durée cumulée est égale à une durée prédéterminée de désoxydation, on interrompt le traitement de l'oxydation.

Chaque niveau d'alerte est associé à une durée prédéterminée de désoxydation différente. Lors du déclenchement effectif de la quatrième étape 4 de traitement de l'oxydation, on considère le niveau d'alerte associé au seuil de critère d'oxydation le plus strict comme ayant été franchi. Les différentes durées prédéterminées sont estimées à l'issue d'une campagne d'essais.

Ainsi, au cours de la quatrième étape 4, on commande le traitement de l'oxydation d'un piège à oxydes d'azote en alternant des phases de richesse supérieure à 1 et des phases de richesse inférieure à 1 jusqu'à ce que la durée cumulée soit égale à au moins une durée prédéterminée de désoxydation.

Dans un mode de réalisation particulier, on pondère la durée passée dans au moins une sous-gamme de températures comprise entre les seuils minimum et maximum pour la détermination de la durée cumulée.

La figure 2 illustre les valeurs prises par l'alerte d'oxydation, la richesse R, la température interne du piège à combustion interne $T_{LNT}$, la durée cumulée $T_{Total}$ et le critère d'oxydation Crit_oxy lors de la détection et du traitement de l'oxydation.

## Revendications

1. Procédé de commande d'un véhicule automobile muni d'un moteur à combustion interne et d'un piège à oxydes d'azote dans la ligne d'échappement dudit moteur à combustion interne, comprenant les étapes suivantes :

   - on détermine (1) la température du piège à oxydes d'azote et on mesure le débit d'oxygène en amont du piège à oxydes d'azote,
   - on détermine (2) une valeur d'un critère d'oxydation du piège à oxydes d'azote en fonction de la température du piège à oxydes d'azote et du débit d'oxygène en amont du piège à oxydes d'azote depuis le dernier traitement de désoxydation du piège à oxydes d'azote,
   - on détermine (3) si la valeur du critère d'oxydation est supérieure à au moins un seuil de critère d'oxydation, et, lorsque tel est le cas, on détermine que le au moins un niveau d'alerte correspondant à au moins un seuil de critère d'oxydation franchi est activé,
   - on réalise (4) un traitement de désoxydation du piège à oxydes d'azote en commandant le moteur à combustion interne de sorte à alterner des phases de fonctionnement à richesse supérieure à 1 et des phases de fonctionnement à richesse inférieure à 1, et
   - on interrompt le traitement de désoxydation lorsque la durée cumulée des phases de fonctionnement à richesse supérieure à 1 est égale à une durée prédéterminée fonction du au moins un niveau d'alerte activé.

2. Procédé selon la revendication 1, dans lequel on détermine le critère d'oxydation du piège à oxydes d'azote par l'intermédiaire d'une cartographie d'iso-oxydation à trois dimensions liant la température du piège à oxydes d'azote, le débit d'oxygène en amont du piège à oxydes d'azote et le critère d'oxydation fonction du temps écoulé depuis le dernier traitement de désoxydation du piège à oxydes d'azote

3. Procédé selon l'une quelconque des revendications précédentes, dans lequel on continue à déterminer le critère d'oxydation après l'activation d'au moins une alerte et on interrompt la détermination du critère d'oxydation dès que le traitement de désoxydation débute.

4. Procédé selon l'une quelconque des revendications précédentes, dans lequel, si au moins un niveau d'alerte est activé pendant la régénération d'un filtre à particules disposé dans la ligne d'échappement du moteur à combustion interne, on retarde le traitement de désoxydation du piège à oxydes d'azote jusqu'à ce que la régénération du filtre à particules soit achevée, puis, on déclenche le traitement de désoxydation du piège à oxydes d'azote.

5. Procédé selon l'une quelconque des revendications précédentes, dans lequel lors du traitement de désoxydation du piège à oxydes d'azote, on commande le moteur à combustion interne de sorte que la température du piège à oxydes d'azote demeure comprise entre un seuil minimum de température de désoxydation et un seuil maximum de température de désoxydation.

6. Procédé selon la revendication 5, dans lequel, pour la détermination de la durée cumulée, on pondère la durée passée dans au moins une sous-gamme de températures comprise entre le seuil minimum de température de désoxydation et le seuil maximum de température de désoxydation.

7. Procédé selon l'une quelconque des revendications précédentes, dans lequel chaque niveau d'alerte est associé à une durée prédéterminée de désoxydation différente, et lors du traitement de désoxydation, on considère la durée prédéterminée la plus importante associée à un niveau d'alerte activé pour l'interruption du traitement de désoxydation.

8. Procédé selon l'une quelconque des revendications précédentes, dans lequel, on mesure la température des gaz circulant dans le piège à oxydes d'azote en amont et en aval du piège à oxydes d'azote, puis on détermine la température du piège à oxydes d'azote en fonction de la température des gaz circulant dans le piège à oxydes d'azote en amont et en aval du piège à oxydes d'azote.

9. Procédé selon l'une quelconque des revendications 1 à 7, dans lequel on détermine la température du piège à oxydes d'azote en mesurant la température interne du piège à oxydes d'azote avec un capteur de température.

**Patentansprüche**

1. Verfahren zur Steuerung eines Kraftfahrzeugs, das mit einem Verbrennungsmotor und einer Stickoxidfalle in der Auspuffanlage des Verbrennungsmotors ausgestattet ist, das die folgenden Schritte umfasst:

   - die Bestimmung (1) der Temperatur der Stickoxidfalle und die Messung des Sauerstoffdurchsatzes vor der Stickoxidfalle,
   - die Bestimmung (2) eines Wertes eines Oxidationskriteriums der Stickoxidfalle in Abhängigkeit von der Temperatur der Stickoxidfalle und des Sauerstoffdurchsatzes vor der Stickoxidfalle seit der letzten Desoxidationsbehandlung der Stickoxidfalle,
   - die Bestimmung (3), ob der Wert des Oxidationskriteriums größer als mindestens ein Grenzwert des Oxidationskriteriums ist, und, wenn dies der Fall ist, die Bestimmung, dass die mindestens eine Warnstufe, die mindestens einem überschrittenen Grenzwert des Oxidationskriteriums entspricht, aktiviert ist,
   - die Durchführung (4) einer Desoxidationsbehandlung der Stickoxidfalle, indem der Verbrennungsmotor so gesteuert wird, dass Betriebsphasen mit einem Luft-Kraftstoff-Verhältnis größer 1 und Betriebsphasen mit einem Luft-Kraftstoff-Verhältnis kleiner 1 abwechseln, und
   - die Unterbrechung der Desoxidationsbehandlung, wenn die Gesamtdauer der Betriebsphasen mit einem Luft-Kraftstoff-Verhältnis größer 1 gleich einer vorbestimmten Dauer in Abhängigkeit von der mindestens einen aktivierten Warnstufe ist.

2. Verfahren nach Anspruch 1, wobei das Oxidationskriterium der Stickoxidfalle mittels eines dreidimensionalen Isooxidations-Kennfeldes bestimmt wird, das die Temperatur der Stickoxidfalle, den Sauerstoffdurchsatz vor der Stickoxidfalle und das Oxidationskriterium in Abhängigkeit von der Zeit verbindet, die seit der letzten Desoxidationsbehandlung der Stickoxidfalle verstrichen ist.

3. Verfahren nach einem der vorhergehenden Ansprüche, wobei die Bestimmung des Oxidationskriteriums nach der Aktivierung mindestens einer Warnung fortgesetzt und die Bestimmung des Oxidationskriteriums unterbrochen wird, sobald die Desoxidationsbehandlung beginnt.

4. Verfahren nach einem der vorhergehenden Ansprüche, wobei, wenn mindestens eine Warnstufe während der Regeneration eines in der Auspuffanlage des Verbrennungsmotors angeordneten Partikelfilters aktiviert wird, die Desoxidationsbehandlung der Stickoxidfalle verzögert wird, bis die Regeneration des Partikelfilters abgeschlossen ist, und dann die Desoxidationsbehandlung der Stickoxidfalle aktiviert wird.

5. Verfahren nach einem der vorhergehenden Ansprüche, wobei der Verbrennungsmotor bei der Desoxidationsbehandlung der Stickoxidfalle so gesteuert wird, dass die Temperatur der Stickoxidfalle zwischen einem minimalen Grenzwert der Desoxidationstemperatur und einem maximalen Grenzwert der Desoxidationstemperatur bleibt.

6. Verfahren nach Anspruch 5, wobei zur Bestimmung der Gesamtdauer die Dauer in mindestens einem Temperaturteilbereich zwischen dem minimalen Grenzwert der Desoxidationstemperatur und dem maximalen Grenzwert der Desoxidationstemperatur gewichtet wird.

7. Verfahren nach einem der vorhergehenden Ansprüche, wobei jede Warnstufe einer verschiedenen vorbestimmten Desoxidationsdauer zugeordnet ist und bei der Desoxidationsbehandlung die höchste vorbestimmte Dauer berücksichtigt wird, die einer aktivierten Warnstufe zur Unterbrechung der Desoxidationsbehandlung zugewiesen ist.

8. Verfahren nach einem der vorhergehenden Ansprüche, wobei die Temperatur der in der Stickoxidfalle zirkulierenden Gase vor und hinter der Stickoxidfalle gemessen wird und dann die Temperatur der Stickoxidfalle in Abhängigkeit von der Temperatur der in der Stickoxidfalle zirkulierenden Gase vor und nach der Stickoxidfalle bestimmt wird.

9. Verfahren nach einem der vorhergehenden Ansprüche 1 bis 7, wobei die Temperatur der Stickoxidfalle bestimmt wird, indem die Innentemperatur der Stickoxidfalle mit einem Temperatursensor gemessen wird.


**Claims**

1. Method for controlling a motor vehicle provided with an internal combustion engine and a nitrogen oxides trap in the exhaust line of said internal combustion engine, comprising the following steps:

   - determining (1) the temperature of the nitrogen oxides trap and measuring the flow rate of oxygen upstream of the nitrogen oxides trap,
   - determining (2) a value of an oxidation criterion of the nitrogen oxides trap as a function of the temperature of the nitrogen oxides trap and of the flow rate of oxygen upstream of the nitrogen oxides trap since the last deoxidation treatment of the nitrogen oxides trap,
   - determining (3) whether the value of the oxidation criterion is greater than at least one oxidation criterion threshold, and, when this is the case, determining that the at least one alert level corresponding to at least one crossed oxidation criterion threshold is activated,
   - performing (4) a deoxidation treatment of the nitrogen oxides trap by controlling the internal combustion engine so as to alternate operating phases with a richness greater than 1 and operating phases with a richness less than 1, and
   - interrupting the deoxidation treatment when the cumulative duration of the operating phases with a richness greater than 1 is equal to a predetermined duration that is a function of the at least one activated alert level.

2. Method according to Claim 1, wherein the oxidation criterion of the nitrogen oxides trap is determined via a three-dimensional iso-oxidation map connecting the temperature of the nitrogen oxides trap, the flow rate of oxygen upstream of the nitrogen oxides trap and the oxidation criterion that is a function of the time that has elapsed since the last deoxidation treatment of the nitrogen oxides trap.

3. Method according to either one of the preceding claims, wherein determining the oxidation criterion is continued after the activation of at least one alert and the determination of the oxidation criterion is interrupted as soon as the deoxidation treatment starts.

4. Method according to any one of the preceding claims, wherein, if at least one alert level is activated during the regeneration of a particulate filter disposed in the exhaust line of the internal combustion engine, the deoxidation treatment of the nitrogen oxides trap is delayed until the regeneration of the particle filter is complete, then, the deoxidation treatment of the nitrogen oxides trap is triggered.

5. Method according to any one of the preceding claims, wherein during the deoxidation treatment of the nitrogen oxides trap, the internal combustion engine is controlled so that the temperature of the nitrogen oxides trap remains between a minimum deoxidation temperature threshold and a maximum deoxidation temperature threshold.

6. Method according to Claim 5, wherein, for the determination of the cumulative duration, the duration spent in at least one sub-range of temperatures between the minimum deoxidation temperature threshold and the maximum deoxidation temperature threshold is weighted.

7. Method according to any one of the preceding claims, wherein each alert level is associated with a different predetermined deoxidation duration, and during the deoxidation treatment, the longest predetermined duration associated with an activated alert level is considered for the interruption of the deoxidation treatment.

8. Method according to any one of the preceding claims, wherein the temperature of the gases circulating in the nitrogen oxides trap upstream and downstream of the nitrogen oxides trap is measured, then the temperature of the nitrogen oxides trap is determined as a function of the temperature of the gases circulating in the nitrogen oxides trap upstream and downstream of the nitrogen oxides trap.

9. Method according to any one of Claims 1 to 7, wherein the temperature of the nitrogen oxides trap is determined by measuring the internal temperature of the nitrogen oxides trap with a temperature sensor.

[Fig 1]

[Fig 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080276602 A1
- DE 102018133184
- EP 1939420 A
- GB 2484746 A